(19) Europäisches Patentamt
European Patent Office
Office européen des brevets

(11) **EP 3 522 279 A1**

(12) **EUROPEAN PATENT APPLICATION**
published in accordance with Art. 153(4) EPC

(43) Date of publication:
**07.08.2019 Bulletin 2019/32**

(51) Int Cl.:
***H01M 8/18*** *(2006.01)*      ***H01M 8/02*** *(2016.01)*

(21) Application number: **17856305.2**

(22) Date of filing: **28.09.2017**

(86) International application number:
**PCT/JP2017/035129**

(87) International publication number:
**WO 2018/062356 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2016 JP 2016192698**

(71) Applicant: **Showa Denko K.K.**
**Tokyo 105-8518 (JP)**

(72) Inventor: **SUZUKI Masahiro**
**Tokyo 105-8518 (JP)**

(74) Representative: **Strehl Schübel-Hopf & Partner**
**Maximilianstrasse 54**
**80538 München (DE)**

(54) **REDOX FLOW BATTERY**

(57)     The present invention provides a redox flow battery including an ion-exchange membrane, a liquid inflow layer, an electrode, and a current collector plate so as to be stacked in this order. The electrode includes a plurality of electrode pieces which are disposed in parallel in a plane direction, a liquid supply passage for supplying an electrolytic solution to the liquid inflow layer is provided between the adjacent electrode pieces, and the electrolytic solution passes through the electrode from an ion-exchange membrane side surface of the electrode to a current collector plate side surface.

FIG. 1

**Description**

TECHNICAL FIELD

The present invention relates to a redox flow battery.

Priority is claimed on Japanese Patent Application No. 2016-192698, filed on September 30, 2016, the content of which is incorporated herein by reference.

BACKGROUND ART

In the redox flow battery, a reduction of internal resistance (cell resistance) and a reduction of a pressure loss when the electrolytic solution permeates through the electrodes are required so as to enhance energy efficiency of the entirety of the redox flow battery.

For example, Patent Document 1 discloses a redox flow battery in which when the electrolytic solution flows in a vertical direction with respect to the surface of the electrode, it is possible to greatly reduce a pressure loss as compared with flowing in an in-plane direction.

Citation List

Patent Literature

[Patent Document 1] Published Japanese Translation No. 2015-530709 of the PCT International Publication

SUMMARY OF INVENTION

Technical Problem

The redox flow battery disclosed in Patent Document 1 allowing the electrolytic solution to flow in the vertical direction with respect to the surface of the electrode, has the structure in which an electrolytic solution inflow region is provided between the ion-exchange membrane and the electrode, a flow passage is also provided in the electrolytic solution inflow region, and the ion-exchange membrane and the electrode are separated by the flow passage. Therefore, it is difficult to obtain a redox flow battery having low cell resistivity.

The invention has been made in consideration of the above-described problem, and an object thereof is to provide a redox flow battery having low cell resistivity despite the fact that an electrolytic solution flows in a vertical direction with respect to an electrode.

Solution to Problem

The invention provides the following configurations to solve the above-described problem.

(1) According to an aspect of the invention, there is provided a redox flow battery including: an ion-exchange membrane; a liquid inflow layer; an electrode; and a current collector plate, so as to be stacked in this order. The electrode includes a plurality of electrode pieces which are disposed in parallel in a plane direction, a liquid supply passage for supplying an electrolytic solution to the liquid inflow layer is provided between the adjacent electrode pieces, and the electrolytic solution passes through the electrode from an ion-exchange membrane side surface of the electrode to a current collector plate side surface.

(2) The redox flow battery according to (1), further including a liquid outflow layer provided between the electrode and the current collector plate.

(3) In the redox flow battery according to (1) or (2), each of the plurality of electrode pieces may have a rectangular shape, the liquid supply passage may be provided along a long side of the electrode piece, and a length of a short side of the electrode piece may be 5 to 70 mm.

(4) In the redox flow battery according to any one of (1) to (3), an effective area ratio of the electrode piece may be 60% or greater. Here, the effective area ratio is (sum of effective electrode areas of the plurality of electrode pieces)/{(sum of the areas of the plurality of electrode pieces) + (sum of areas of portions between the plurality of electrode pieces)}.

(5) In the redox flow battery according to any one of (1) to (4), a thickness of the liquid inflow layer may be 1/150 to 1/20 times the length of the short side of the electrode piece.

(6) In the redox flow battery according to any one of (1) to (5), the thickness of the liquid inflow layer may be 0.1 to 0.9 mm.

(7) Both a positive electrode side and a negative electrode side with respect to the ion-exchange membrane may have the structure according to any one of (1) to (6).

Advantageous Effects of Invention

According to the invention, it is possible to provide the redox flow battery having low cell resistivity.

BRIEF DESCRIPTION OF DRAWINGS

FIG. 1 is a schematic cross-sectional view of a redox flow battery according to an embodiment of the invention.

FIG. 2 is a schematic plan view when a current collector plate accommodated in a cell frame is seen from a stacking direction.

FIG. 3 is a schematic cross-sectional view of the redox flow battery according to the embodiment of the invention in which an electrode is disposed on the current collector plate shown in FIG. 2, and in the drawings, (a) is a schematic cross-sectional view taken along line X-X in FIG. 2, and (b) is a schematic cross-sectional view taken along line Y-Y in FIG. 2.

DESCRIPTION OF EMBODIMENTS

Hereinafter, a redox flow battery will be described in detail with reference to the accompanying drawings. In drawings which are used in the following description, for convenience, characteristic portions may be enlarged for easy understanding of the characteristics of the invention, and dimensional ratios and the like of respective constituent elements may be different from actual dimensions. Materials, dimensions, and the like which are exemplary examples in the following description are illustrative only. The invention is not limited thereto, and approximate modifications can be made in a range exhibiting the effect of the invention.

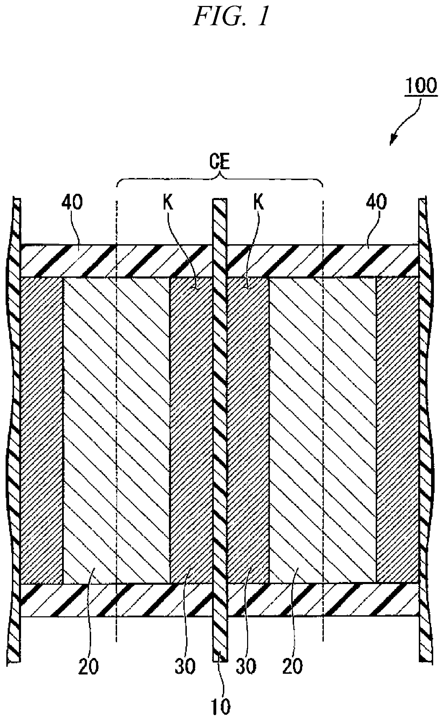

A redox flow battery 100 shown in FIG. 1 includes an ion-exchange membrane 10, a current collector plate 20, and an electrode 30. Outer peripheries of the current collector plate 20 and the electrode 30 are surrounded by a cell frame 40. The electrode 30 is provided in an electrode chamber K that is formed by the ion-exchange membrane 10, the current collector plate 20, and the cell frame 40. The cell frame 40 prevents an electrolytic solution supplied to the electrode chamber K from being leaked to the outside.

Although not shown in FIG. 1, a liquid inflow layer is provided between the ion-exchange membrane 10 and the electrode 30. In some cases, a liquid outflow layer is provided between the electrode 30 and the current collector plate.

The redox flow battery 100 shown in FIG. 1 has a cell stack structure in which a plurality of cells CE are stacked. The number of the cells CE stacked may be appropriately changed according to usage, and a single cell is also possible. When the plurality of cells CE are connected in series, a voltage in practical use is obtained. Each of the cells CE includes the ion-exchange membrane 10, two electrodes 30 which function as a positive electrode and a negative electrode with the ion-exchange membrane 10 interposed therebetween, and current collector plates 20 between which the two electrodes 30 are interposed.

Hereinafter, a stacking direction of the cell stack structure in which the cells CE are stacked may be referred to as "stacking direction", "plane-perpendicular direction", or "vertical direction", and a plane direction perpendicular to the stacking direction of the cell stack structure may be referred to as "in-plane direction".

<Ion-Exchange Membrane>

As the ion-exchange membrane 10, a positive ion-exchange membrane or a negative ion-exchange membrane can be used. Specific examples of the positive ion-exchange membrane include a perfluorocarbon polymer having a sulfonic acid group, a hydrocarbon-based polymer compound having a sulfonic acid group, a polymer compound doped with an inorganic acid such as phosphorous acid, an organic/inorganic hybrid polymer of which a part is substituted with a proton conductive functional group, and a proton conductor in which a polymer matrix is impregnated with a phosphoric acid solution or a sulfuric acid solution. Among these, the perfluorocarbon polymer having a sulfonic acid group is preferable, and Nafion (registered trademark) is more preferable.

The thickness of the ion-exchange membrane is not particularly limited, but the thickness of 150 $\mu$m or less is appropriate in use, for example. The thickness of the ion-exchange membrane is more preferably 120 $\mu$m or less, and still more preferably 60 $\mu$m or less. The lower limit value of the thickness of the ion-exchange membrane may be 20 $\mu$m, for example.

Hereinafter, a description of the embodiment will be given of a case of the positive ion-exchange membrane.

<Current Collector Plate>

The current collector plate 20 is a current collector that plays a role of delivering and receiving an electron to and from the electrode 30. In a case where both surfaces of the current collector plate 20 can be used as a current collector, the current collector plate 20 may be referred to as "bipolar plate".

A material having conductivity may be used as the current collector plate 20. For example, a conductive material containing carbon can be used. Specific examples thereof include a conductive resin including graphite and an organic polymer compound, the conductive resin in which a part of graphite is substituted with at least one of carbon black and diamond-like carbon, or a shaped material obtained through kneading and shaping of carbon and a resin. Among these, it is preferable to use the shaped material obtained through kneading and shaping of carbon and a resin.

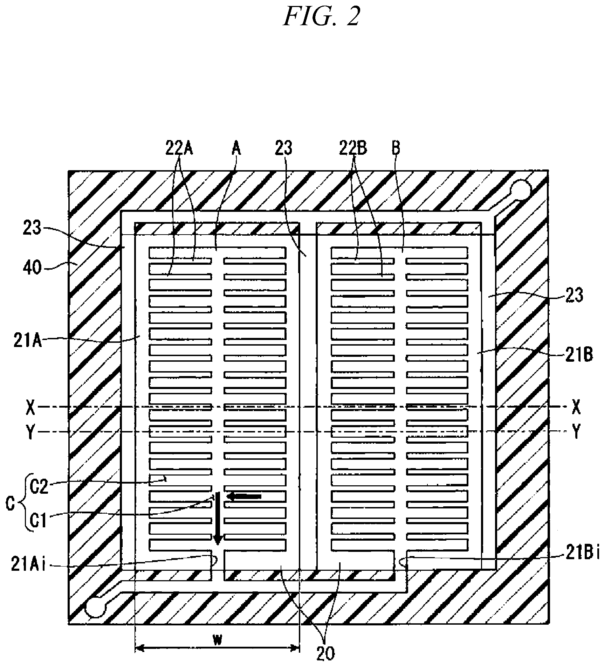

The current collector plate 20 may be provided with discharge grooves A and B through which the electrolytic solution flows, for example, as shown in FIG. 2 as a liquid inflow layer or a part of the liquid inflow layer on the electrode side surface thereof.

<Supply Passage>

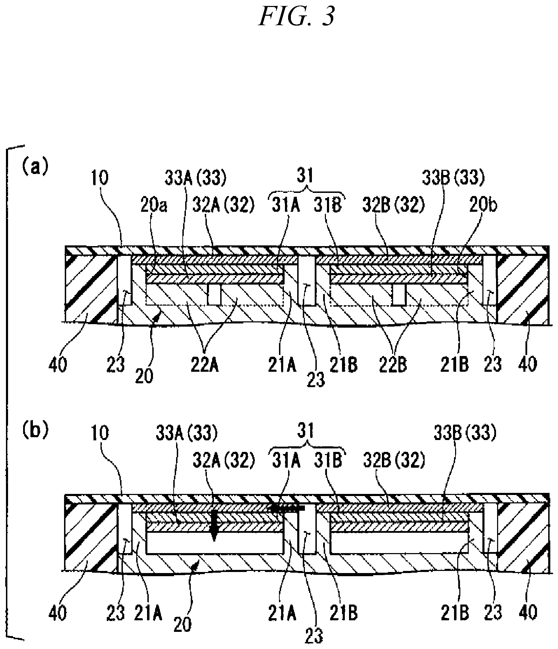

As shown in FIG. 3, supply passages 23 are disposed between electrode pieces 31A and 31B adjacent to each other and at both ends thereof in a plan view. An electrolytic solution is supplied to the liquid inflow layer through the supply passage 23. Details of the electrode piece and the liquid inflow layer will be described later.

FIG. 3 is a schematic cross-sectional view of the redox flow battery according to the embodiment of the invention in which the ion-exchange membrane 10, a liquid inflow layer 32, an electrode piece 31, and a liquid outflow layer 33 are disposed on the current collector plate 20 shown in FIG. 2, and in the drawings, FIG. 3(a) is a schematic cross-sectional view taken along line X-X in FIG. 2, and FIG. 3(b) is a schematic cross-sectional view taken along line Y-Y in FIG. 2.

As will be described later, in a case where the electrode piece 31 has a rectangular shape, since a flow distance of the electrolytic solution passing through the liquid inflow layer 32 can be shortened, the supply passage 23 is preferably disposed along a long side of the electrode piece. When the flow distance of the electrolytic solution passing through the liquid inflow layer 32 is shortened, it is possible to reduce a pressure necessary for the electrolytic solution to pass through the liquid inflow layer 32, and it is possible to suppress an increase in cell resistivity by reducing the thickness of the liquid inflow layer 32.

<Electrode>

The electrode used in the embodiment is divided into a plurality of electrodes, and each electrode divided into the plurality of electrodes is referred to as an electrode piece. In a case of being simply referred to as "electrode", it is a generic term for an electrode piece, and the electrode is composed of a plurality of electrode pieces disposed in parallel in a plane direction.

The electrode piece 31 shown in FIG. 3 is disposed on each of two flow passage networks (including discharge grooves A and B) for discharging liquid formed in the current collector plate 20, and includes the two electrode pieces 31 A and 31B disposed in parallel in the plane direction.

In the redox flow battery of the related art, when dividing the electrode into two or more electrodes, an effective electrode area causing a battery reaction decreases, so that it is not considered that the electrode division is effective.

As shown in FIG. 3, when electrodes are divided, a gap (corresponding to the width of from a supply passage wall 21A to a supply passage wall 21B through the supply passage 23 in FIG. 3) not functioning as an electrode is formed between the electrode pieces. The area of the electrode in a portion the gap decreases, and thus the area of the electrode piece (hereinafter, may be referred to as "effective electrode area") that substantially contributes to the battery reaction decreases. In addition, hereinafter, a value obtained by dividing "a total of effective electrode area in a division case" by "an effective electrode area in a non-division case" may be referred to as "effective area ratio".

In FIGS. 2 and 3, in the redox flow battery of the embodiment, the electrolytic solution supplied to the liquid inflow layer 32 from the supply passage 23 passes through the electrode piece 31 and comes out toward the current collector plate 20. When the electrode is divided into a plurality of electrodes as the electrode piece 31, a width w (refer to FIG. 2) of the liquid inflow layer 32 becomes narrow. Accordingly, when the electrolytic solution reaches the electrode piece 31 from the supply passage 23, the flow distance of the electrolytic solution that flows through the liquid inflow layer 32 becomes short. This means that the electrolytic solution is supplied to the electrode piece 31 with lower flow passage resistance. In addition, in the liquid inflow layer 32, the electrolytic solution flows in the plane direction to reaches the electrode piece 31, and thus if the thickness of the liquid inflow layer 32 is thin, the flow passage resistance becomes high. However, when a flow distance along the liquid inflow layer 32 in the plane direction becomes short, the flow passage resistance decreases, and thus it is possible to reduce the thickness of the liquid inflow layer 32 by the decrease in the flow passage resistance. When the thickness of the liquid inflow layer 32 can be reduced, it is possible to make the electrode pieces 31 be close to the ion-exchange membrane, and it is possible to make shorten a migration distance of hydrogen ions. As a result, it leads to a decrease in the cell resistivity. Hereinafter, an effect capable of supplying the electrolytic solution of the electrode piece to the electrode with lower flow passage resistance, or an effect capable of making the electrode piece 31 be close to the ion-exchange membrane may be referred to as "division effect".

Typically, it is considered that when employing a configuration in which the electrode piece 31 is divided into a plurality of electrode pieces, and the supply passage 23 of the electrolytic solution is provided between the electrode pieces adjacent to each other, and the like, the effective area of the electrode piece 31 decreases, and thus the cell resistivity increases. However, although an example of the present invention is shown in FIGS. 2 and 3, with respect to the effect of decreasing the effective electrode area causing the battery reaction by dividing the electrode piece 31 into the electrode pieces 31A and 31B, if the "division effect" can be increased, the cell resistivity can be lowered.

<Electrode Piece>

As the electrode piece 31, a conductive sheet including a carbon fiber can be used. The carbon fiber stated here is fiber-shaped carbon, and examples thereof include a carbon fiber, a carbon nanotube, and the like. When the electrode 31 includes the carbon fiber, a contact area between the electrolytic solution and the electrode 31 increases, and thus reactivity of the redox flow battery 100 is enhanced. Particularly, when including a carbon nanotube having a diameter of 1 $\mu$m or less, since a fiber diameter of the carbon nanotube is small, it is possible to enlarge the contact area, and thus this range is preferable. In addition, when including a carbon fiber having a diameter of 1 $\mu$m or greater, the conductive sheet is strong and is less likely to be fractured, and thus this range is preferable. As the conductive sheet including the carbon fiber, for example, a carbon felt, carbon paper, a carbon nanotube sheet, and the like can be used.

In a case where the electrode piece 31 is an electrode having a high specific surface area, such as one constituted by a conductive sheet including a carbon nanotube having an average fiber diameter of 1 $\mu$m or less, liquid permeability of the electrolytic solution is not high. Accordingly, the liquid inflow layer 32 with good liquid permeability is provided on the ion-exchange membrane side. Details of the liquid inflow layer 32 will be described later.

Each of the plurality of electrode pieces which constitute the electrode piece has a rectangular shape, and a length (width) of a short side is preferably from 5 mm to 70 mm, more preferably from 10 mm to 50 mm, and still more preferably from 10 mm to 30 mm. Manufacturing is easily performed by making the width of the electrode piece equal to or more than the lower limit of the above range, and it is possible to reduce the flow passage resistance of the electrolytic solution, reduce the thickness of the liquid inflow layer, and lower the cell resistivity by making the width of the electrode piece equal to or less than the upper limit of the above range.

In addition, the effective area ratio is preferably 60% or greater, more preferably 70% or greater, and still more preferably 75%. The effective area ratio is preferably as close as possible to 100% as long as the supply passage of the electrolytic solution can be secured. The upper limit value of the effective area ratio that can secure the supply passage of the electrolytic solution can be 99%, for example.

<Liquid Inflow Layer>

The liquid inflow layer 32 is a member that is provided for supplying the electrolytic solution to the electrode piece 31.

The liquid inflow layer 32 shown in FIG. 3 has a configuration divided by the supply passage 23 (configuration including a plurality of elements), but may be configured as one sheet over the entirety of the cells.

The liquid inflow layer 32 has a configuration in which the electrolytic solution is easier to flow in comparison to the electrode piece 31. Flowing easiness of the electrolytic solution can be evaluated by a Darcy's rule permeability. The Darcy's rule is used to indicate permeability of a porous medium, but is also applied to members other than the porous material in the invention for convenience. At this time, with respect to a non-uniform and anisotropic member, permeability in a direction, in which the lowest permeability is obtained, is employed.

The Darcy's rule permeability (hereinafter, may be simply referred to as "permeability") in the liquid inflow layer 32 is preferably, for example, 50 or more times the permeability of the electrode piece 31, and more preferably 100 or more times. Here, the Darcy's rule permeability k ($m^2$) is calculated from a cross-sectional area S ($m^2$) of a member through which a liquid having viscosity $\mu$ (Pa·sec) permeates, a length L (m) of the member, and a differential pressure $\Delta$P (Pa) between a liquid inflow side and a liquid outflow side of the member when a liquid passes therethrough in a flow rate of Q ($m^3$/sec) by using a relationship of a liquid permeation flux (m/sec) expressed by the following expression. Furthermore, in a case where the inside of the liquid inflow member is an empty space, in a state of being attached to the redox flow battery, a cross-sectional area perpendicular to a permeation direction through the space is defined as "cross-sectional area S of a member through which a liquid permeates".

[Expression 1]

$$\frac{Q}{S} = \frac{k}{\mu} \times \frac{\Delta P}{L} \quad \cdots (1)$$

The permeability in the liquid inflow layer 32 is permeability in an in-plane direction (direction parallel to a sheet surface) with the sheet surface of the electrode piece 31 set as a reference, and the permeability of the electrode piece 31 is permeability in a normal direction (direction perpendicular to the sheet surface) with the sheet surface of the electrode piece 31 set as a reference.

When the permeability in the liquid inflow layer 32 is sufficiently high in comparison to the permeability of the electrode piece 31, in other words, when the pressure necessary for the electrolytic solution to pass through the liquid inflow layer 32 is sufficiently lower than the pressure necessary for the electrolytic solution to pass through the electrode piece 31, the electrolytic solution is uniformly supplied to the electrode piece 31, which is preferable.

The thickness of the liquid inflow layer 32 (before being embedded) can be set to 0.1 mm to 0.9 mm. The thickness of the liquid inflow layer has a great effect on the cell resistivity. When the thickness of the liquid inflow layer 32 is set to 0.1 mm to 0.9 mm, it is easy to pack the redox flow battery having lower cell resistivity in comparison to the related art. The thickness of the liquid inflow layer 32 (before being embedded) is more preferably 0.1 mm or greater and 0.5 mm or less.

On the other hand, when the thickness of the liquid outflow layer 32 after being embedded is increased, it is possible to further reduce the pressure necessary for the electrolytic solution to pass through the liquid outflow layer 32.

From the viewpoint of reducing the pressure, the thickness of the liquid inflow layer 32 after being embedded is preferably 0.08 mm or greater, more preferably 0.1 mm to 0.7 mm, and still more preferably 0.15 to 0.5 mm. When the thickness is 0.08 mm or greater, it is possible to reduce the pressure necessary for the electrolytic solution to pass through the liquid inflow layer 32, and thus this range is preferable. However, from the viewpoint of suppressing an increase in cell resistivity, the thickness is preferably 0.7 mm or less.

Here, "before being embedded" means a state of each material alone, and "after being embedded" means a state in which the material is embedded inside the completed redox flow battery cell.

From the viewpoint of reducing the pressure and suppressing the increase in the cell resistivity, the thickness of the liquid inflow layer 32 (after being embedded) is preferably 1/150 to 1/20 of the short side length (width) of the electrode piece 31, and more preferably 1/100 to 1/40.

It is preferable that the liquid inflow layer 32 is constituted by a porous sheet (first porous sheet). In this case, the liquid inflow port corresponds to a plurality of holes which exist in a lateral surface of the first porous sheet. The "permeability in the liquid inflow layer 32" in this case represents permeability in an in-plane direction of the entirety of the first porous sheet.

The first porous sheet may be a sponge-shaped member having vacancies, or a member formed through intertangling of fibers. For example, fabric obtained by weaving relatively long fibers, a felt obtained by intertangling fibers without being woven, paper made into a sheet shape from relatively short fibers, and the like can be used. In a case where the first porous sheet is constituted by fibers, it is preferable that the first porous sheet is constituted by fibers having an average fiber diameter of greater than 1 $\mu$m. When the average fiber diameter of the first porous sheet is 1 $\mu$m or greater, it is possible to sufficiently secure permeability of the electrolytic solution in the first porous sheet.

It is preferable that the first porous sheet is not corroded by the electrolytic solution. Specifically, in the redox flow battery, an acidic solution is used as an electrolytic solution in many cases. According to this, it is preferable that the first porous sheet has acid resistance. In addition, oxidation due to a reaction is also considered, and thus it is preferable that the first porous sheet has oxidation resistance. In a case where the porous sheet has the acid resistance or the oxidation resistance, the porous sheet after use enters a state of maintaining a shape thereof.

For example, a fiber formed from a polymer or glass that has the acid resistance is preferable. As the polymer, a fiber formed from at least one of a fluorine-based resin, a fluorine-based elastomer, polyester, an acrylic resin, polyethylene, polypropylene, polyarylate, polyether ether ketone, polyimide, and polyphenylene sulfide is preferably used. From the viewpoint of the acid resistance, a fluorine-based resin, a fluorine-based elastomer, polyester, an acrylic resin, polyethylene, polypropylene, polyether ether ketone, polyimide, and polyphenylene sulfide are more preferable. From the viewpoint of the oxidation resistance, a fluorine resin, a fluorine-based elastomer, polyethylene, polyether ether ketone, and polyphenylene sulfide are more preferable. From the viewpoint of heat resistance, a fluorine resin, a fluorine-based elastomer, polyester, polypropylene, polyarylate, polyether ether ketone, polyimide, and polyphenylene sulfide are more preferable.

In addition, it is preferable that the first porous sheet has conductivity. When the first porous sheet has conductivity, it is possible to expect an auxiliary electrode action. For example, in a case of forming the first porous sheet by using fibers formed from a material having conductivity, a fiber formed from a metal or an alloy that has acid resistance and oxidation resistance, or carbon fiber can be used. Examples of the fiber of the metal or the alloy include fibers including titanium, zirconium, platinum, and the like. Among these, it is preferable to use carbon fiber.

<Liquid Outflow Layer>

The liquid outflow layer 33 may be inserted between the current collector plate 20 and the electrode piece 31 for the purpose of supplementing the physical strength of the electrode piece 31 or the like. A second porous sheet can be used for the liquid outflow layer. The same material as that of the first porous sheet can be used for the second porous sheet. In addition, it is preferable that the second porous sheet has conductivity. When the second porous sheet has conductivity, it is possible to expect an action as a part of the current collector.

<Flow of Electrolytic Solution>

The electrolytic solution passes through the liquid inflow layer 32 from the supply passage 23, flows from the ion-exchange membrane side surface of the electrode piece 31 to the current collector plate side surface, and passes through the discharge grooves A and B formed on the liquid outflow layer 33 and the surface of the current collector plate 20 to be discharged. For example, as indicated by arrows in FIG. 3(b), the electrolytic solution entering a liquid inflow layer 32A from the supply passage 23 in the center of FIG. 3(b) sequentially passes through the electrode 32A and a liquid outflow layer 33A, and is discharged through the discharge groove A as indicated by arrows in FIG. 2.

In the electrolytic solution after passing through the electrode piece 31, a ratio occupied by an electrolytic solution after an oxidation reaction or a reduction reaction occurs is high. The electrolytic solution flows out to the current collector plate 20 side. By setting the feeding direction of the electrolytic solution as described above, it is possible to efficiently remove ions after valence variation from the vicinity of the ion-exchange membrane of the electrode piece 31. Accordingly, it is possible to enhance reactivity. For example, in a case of using an electrolytic solution that includes vanadium, in the course of charging, $V^{4+}$ varies into $V^{5+}$ in a positive electrode, and $V^{3+}$ varies into $V^{2+}$ in a negative electrode. According to this, when efficiently removing the ions ($V^{5+}$ and $V^{2+}$) after the reaction, it is possible to rapidly supply the ions ($V^{4+}$ and $V^{3+}$) before the reaction to the vicinity of the ion-exchange membrane of the electrode, and thus ions before the reaction and ions after the reaction are efficiently substituted with each other. As a result, it is possible to enhance reaction efficiency. In the course of discharging, the valence variation of ions is inverted. However, as in the course of charging, the ions before the reaction and the ions after reaction are efficiently substituted with each other, and thus it is possible to enhance reaction efficiency. This can also be understood from a comparison between Example 2 and Reference Example 1, to be described later.

<Calculation of Cell Resistivity>

The cell resistivity [$\Omega \cdot cm^2$] is calculated by the following Expression (1) by using a midpoint rule after obtaining charging and discharging curves by performing charging and discharging. Charging and discharging are performed with the same current.

$$\rho_{s,cell} = S \times (V_1 - V_2)/(2 \times I) \dots (1)$$

Here, $\rho_{s,cell}$: Cell resistivity [$\Omega \cdot cm^2$]
S: Electrode area [$cm^2$]
$V_1$: Midpoint voltage [V] of a charging curve
V2: Midpoint voltage [V] of a discharging curve
1: Charging and discharging current [A]

The calculation method will be described in more detail.

In the charging and discharging curves, the charging curve is located on an upper side, and the discharging curve is located on a lower side. This is caused by battery internal resistance. That is, in discharging, a voltage, which corresponds to a voltage drop (over-voltage) corresponding to battery internal resistance with respect to an open end voltage (voltage when a current does not flow), becomes a discharging voltage. On the other hand, in charging, a voltage, which corresponds to a voltage rise (over-voltage) corresponding to the battery internal resistance with respect to the open end voltage, becomes a charging voltage. These relationships are expressed by the following expressions.

$$\text{Charging voltage (V)} = \text{open end voltage (V)} + \text{over-voltage (V)} \ldots \text{(1-a)}$$

$$\text{Discharging voltage (V)} = \text{open end voltage (V)} - \text{over-voltage (V)} \ldots \text{(1-b)}$$

$$\text{Over-voltage (V)} = \text{battery internal resistance } (\Omega) \times \text{charging and discharging}$$

$$\text{current (I)} \ldots \text{(1-c)}$$

From Expressions (1-a) to (1-c), an expression of battery internal resistance $(\Omega)$ = {charging voltage (V) - discharging voltage (V)}/2 $\times$ charging and discharging current (I) is obtained. Here, when the charging and discharging current (I) is set as a current density, an expression of cell resistivity $[\Omega \cdot cm^2]$ is obtained.

Here, in the method of calculating the cell resistivity $[\Omega \cdot cm^2]$ by the midpoint rule, in the charging and discharging curves (the horizontal axis: electrical capacity (Ah), and the vertical axis: battery voltage (V)), a voltage $(V_1)$ corresponding to 1/2 times charging capacity obtained from the charging curve is set as a charging voltage, and a voltage $(V_2)$ corresponding to 1/2 times discharging capacity obtained from the discharging curve is set as a discharging voltage.

Values of the cell resistivity shown in Examples are obtained by performing charging and discharging under charging and discharging conditions of a charging and discharging current density of 100 mA/cm$^2$, a charging termination voltage of 1.8 V, a discharging termination voltage of 0.8 V, and a temperature of 25°C.

EXAMPLES

Hereinafter, Examples of the invention will be described. Furthermore, the invention is not limited to the following Examples.

(Example 1)

[Preparation of Sample and Measurement of Permeability]

First, a conductive sheet used in an electrode piece 31 was prepared. 90 parts by mass of a first carbon nanotube having an average fiber diameter of 150 nm and an average fiber length of 15 $\mu$m, and 10 parts by mass of a second carbon nanotube having an average fiber diameter of 15 nm and an average fiber length of 3 $\mu$m with respect to the total of 100 parts by mass of the first carbon nanotube and the second carbon nanotube were mixed in pure water. Then, 1 part by mass of polyisothionaphthene sulfonic acid was added with respect to the total of 100 parts by mass of the first carbon nanotube and the second carbon nanotube to prepare a mixed solution. The mixed solution that was obtained was processed with a wet-type jet mill, thereby obtaining a dispersed solution of the carbon nanotube. 50 parts by mass of carbon fiber having an average fiber diameter of 7 $\mu$m and an average fiber length of 0.13 mm with respect to the total of 100 parts by mass of the first and second carbon nanotubes and the carbon fiber was additionally added to the dispersed solution, and the dispersed solution was stirred by a magnetic stirrer to disperse the carbon fiber. The resultant dispersed solution was filtrated on filter paper, and was dehydrated in combination with the filter paper. Then, compression by a press machine and drying were performed to prepare a conductive sheet including the carbon nanotubes. The average thickness of the conductive sheet before being embedded was 0.4 mm.

The permeability of the prepared conductive sheet is proportional to a differential pressure $\Delta P$ and a length L, and thus the permeability was evaluated in a length L different from a length of a battery in Example 1. 30 sheets of the prepared conductive sheet were stacked in a total thickness of 1 cm, and a Ni mesh sheet of 60 meshes, which is constituted by a Ni wire having a diameter of 0.10 mm, was disposed on both surfaces of the stacked body and was compressed. The stacked body was placed in a permeability measuring cell having a cross-sectional area of 1.35 cm$^2$ (width: 50 mm, height: 2.7 mm) and a length of 1 cm for measurement. Water (20°C, viscosity=1.002 mPa·sec) was allowed to permeate through the permeability measuring cell at a permeation flux of 0.5 cm/sec to measure a differential pressure (outlet pressure-inlet pressure) due to the stacked conductive sheets and calculated, and calculated the permeability. The permeability of the conductive sheet used in Example 1 was 2.7 $\times$ 10$^{-13}$ m$^2$.

Next, as shown in FIGS. 2 and 3, a groove was formed in a current collector plate 20 constituted by a carbon plastic molded body to prepare a flow passage network having an inner wall 22 in the current collector plate 20. The shape and disposition of the flow passage network that was formed were set to the configuration in FIGS. 2 and 3. The size of the entirety of flow passage networks including the supply passage 23 was set to 100 mm × 100 mm, and two flow passage networks having the size of a supply passage wall outer dimension of 49 mm × 100 mm were disposed in parallel with a gap having a width of 1 mm. At this time, the two flow passage networks were set to have the same shape. The width of a supply passage wall 21 (21A and 21B) was set to 1.5 mm, a width of the inner wall 22 (22A and 22B) was set to 1 mm, the width of a first flow passage C1 was set to 1 mm, and the width of a second flow passage C2 was set to 3 mm. The thickness of the flow passage network (the height of the supply passage wall 21) was set to 1 mm, and the height of the inner wall 22 (22A and 22B) was set to 0.69 mm.

Openings 21Ai and 21Bi were set to a position shown in FIG. 2, and a hole having a diameter of 0.8 mm was formed and provided in the supply passage wall. The supply passages 23 were provided on both side surfaces of the supply passage wall 21 and between the two flow passage networks (refer to the supply passage 23 in FIG. 2). The supply passage between the two flow passage networks was formed by using a space having the width of 1 mm. In addition, the width of the supply passage on both side surfaces of the supply passage wall was 0.5 mm.

The shape of the flow passage network is described in detail. The supply passage 23 (center) having a width of 1 mm and a length of 100 mm is installed at the center of the entirety of the flow passage networks (100 mm × 100 mm), and the supply passage 23 (right end or left end) having a width of 0.5 mm and a length of 100 mm which is parallel to the supply passage 23 (center) is installed at the right end or left end of the entirety of the flow passage networks.

Further, the supply passage 23 (upper end) (having a width of 0.5 mm and a length of 100 mm) orthogonal to the supply passage 23 (center) is disposed to be connected to upper end portions of the supply passage 23 (center) and the supply passage 23 (right end and left end) and is connected to a supply port (not shown).

The flow passage networks (49 mm × 100 mm) are installed in parallel on the right and left sides of the supply passage 23 (center) interposed therebetween. In Example 1, since two flow passage networks are disposed, the supply passage 23 is disposed at the center interposed between the two flow passage networks, but in a case where three or more flow passage networks are disposed, the supply passage 23 (excluding the right end and the left end) is disposed in the middle portion of the flow passage networks adjacent to each other.

On the outermost periphery of the flow passage network, the supply passage wall 21 (21A or 21B) (width: 1.5 mm, height: 1 mm) which is a boundary with the supply passage 23 is installed.

The flow passage network has the first flow passage C1 (width: 1 mm, length: 98.5 mm) parallel to the supply passage 23 (center) and a plurality of the second flow passages C2 (width: 3 mm, length: 46 mm) provided at regular intervals so as to be orthogonal to the first flow passage C1, for forming a discharge groove A or B.

The discharge groove A or B is surrounded by the supply passage wall 21. More specifically, the outer periphery of the discharge groove A or B is surrounded by the supply passage wall 21 provided at both right and left ends of the second flow passage C2, which is orthogonal to the second flow passage C2 and parallel to the supply passage 23 (center) and the supply passage wall 21 parallel to the second flow passage C2 connecting the upper end and the lower end of the supply passage wall 21 at the both right and left ends of the second flow passage C2.

In addition, the inner wall 22 (22A or 22B) (width: 1 mm, height: 0.69 mm) parallel to the flow passage C2 is provided between the plurality of second flow passages C2 provided at regular intervals.

In the discharge groove A or B, an opening 21Ai or 21Bi that is continuous with the first flow passage C1 is provided at the lower end portion (downstream side) of the first flow passage C1, and the opening is provided with a hole having a diameter of 0.8 mm in the supply passage wall 21. The opening 21Ai or 21Bi is connected to a discharge port (not shown).

In addition, as the liquid inflow layer 32, carbon fiber paper (GDL10AA manufactured by SGL CARBON JAPAN Co., Ltd.; hereinafter sometimes referred to as "CFP") having a porous property was prepared. The thickness of the CFP was 0.2 mm.

The permeability of the CFP was measured by stacking 11 sheets of the CFP of 50 mm × 50 mm, and providing the resultant stacked body in a permeability measuring cell having a cross-sectional area of 1.35 cm$^2$ (width: 50 mm, and height: 2.7 mm) and a length of 5 cm in a state of being compressed in a stacking direction. Water (20°C) was allowed to permeate through the permeability measuring cell at a permeation flux of 0.5 cm/sec to measure a differential pressure (outlet pressure-inlet pressure) due to the stacked CFP, and the permeability was calculated. The permeability of the liquid inflow layer used in Example 1 was $4.1 \times 10^{-11}$ m$^2$.

[Assembling of Battery]

A battery was assembled using the current collector plate 20, the conductive sheet (electrode piece 31), the CFP as the liquid inflow layer 32, and the ion-exchange membrane 10 in which the flow passage network was prepared. Since the strength of the conductive sheet (electrode piece 31) was sufficient, the liquid outflow layer 33 as shown in FIG. 3 was not provided. Conductive sheets (electrode pieces 31) of 46 mm × 97 mm were disposed in each of the two flow passage networks formed in the current collector plate 20 so as to be contained in the accommodation portion surrounded by the supply passage wall 21. Next, as the liquid inflow layer 32, three sheets of the CFP of 49 mm × 100 mm were stacked, and the stacked body was disposed on the supply passage wall 21 so that the outer periphery thereof was coincident.

The current collector plate 20 including the flow passage networks, the conductive sheet (electrode piece 31), and the CFP (liquid inflow layer 32) were stacked in this order.

In addition, as the ion-exchange membrane 10, Nafion N212 (registered trademark, manufactured by DuPont) was used, and two electrodes having the above-described configuration were respectively set as a positive electrode and a negative electrode. The redox flow battery was assembled by using the ion-exchange membrane, the electrodes, a frame (not shown), a gasket, a current collector plate, and a push plate.

In measuring the cell resistivity with the battery assembled in this way, an aqueous solution containing vanadium ions (IV valence) and sulfuric acid on the positive electrode side, and an aqueous solution containing vanadium ions (III valence) and sulfuric acid on the negative electrode side were introduced as an electrolytic solution, respectively, and 100 ml of each electrolytic solution was circulated by a tube pump so as to flow from the liquid inflow layer 32 to the current collector plate 20 side through the electrode (electrode piece 31). The flow rate of the electrolytic solution was set at 112 ml/min.

(Examples 2 and 3, and Comparative Example 1)

A difference between Examples 2 and 3 and Comparative Example 1, and Example 1 is as follows.

In Example 2, three flow passage networks having the size of 32.3 mm × 100 mm were disposed in parallel with a gap having a width of 1 mm, with respect to the entirety of the flow passage networks (100 mm × 100 mm). The flow passage network had the same configuration as the flow passage network of Example 1 except that the width of the second flow passage C2 is 3 mm and the length thereof is 29.3 mm according to the width of the flow passage network. According to the size of the flow passage network, the conductive sheet (electrode piece 31) was set to 29.3 mm × 97 mm, and the CFP (liquid inflow layer 32) was set to 32.3 mm × 100 mm. In addition, as a liquid inflow layer, two sheets of CFP were stacked and the stacked body was used. The reason for setting the number of stacked sheets to two is to adjust liquid resistance of the liquid inflow layer ([the width of the liquid inflow layer/the number of stacked sheets of the CFP] as an index) to Example 1 as much as possible. Hereinafter, in Other Examples and Comparative Examples as well, adjustment was made by the number of stacked sheets.

In Example 3, five flow passage networks having the size of 19 mm × 100 mm were disposed in parallel with a gap having a width of 1 mm, with respect to the entirety of the flow passage networks (100 mm × 100 mm). The flow passage network had the same configuration as the flow passage network of Example 1 except that the width of the second flow passage C2 is 3 mm and the length thereof is 16 mm according to the width of the flow passage network. According to the size of the flow passage network, the conductive sheet (electrode piece 31) was set to 16 mm × 97 mm, and the CFP (liquid inflow layer 32) was set to 19 mm × 100 mm. In addition, as a liquid inflow layer, the CFP was not stacked and was used as a single layer.

In Comparative Example 1, one flow passage network having the size of 99 mm × 100 mm was disposed, with respect to the entirety of the flow passage networks (100 mm × 100 mm). The flow passage network had the same configuration as the flow passage network of Example 1 except that the width of the second flow passage C2 is 3 mm and the length thereof is 96 mm according to the width of the flow passage network. According to the size of the flow passage network, the conductive sheet (electrode piece 31) was set to 96 mm × 97 mm, and the CFP (liquid inflow layer 32) was set to 99 mm × 100 mm. In addition, as a liquid inflow layer, six sheets of CFP were stacked and the stacked body was used.

(Reference Example 1)

A battery was assembled in the same manner as in Example 2. However, the feeding direction of the electrolytic solution was reversed. That is, the electrolytic solution was sent from the current collector plate 20 side, and the electrode piece 31 and the liquid inflow layer 32 were made to circulate in this order so as to flow toward the supply passage 23 side.

The cell resistivity of each of Examples 1 to 3, Comparative Example 1, and Reference Example 1 is shown in Table 1.

In addition, in Table 1 and the following description, an "effective area ratio" represents a value obtained by dividing the sum of effective electrode areas of electrode pieces in a case of being divided by an effective electrode area in a case of not being divided.

An effective electrode area (the sum of effective electrode areas of electrode pieces) in which a battery reaction occurs in Examples 1 to 3 is smaller than an effective electrode area in Comparative Example 1, but the cell resistivity in Examples 1 to 3 is lower than the cell resistivity in Comparative Example 1. The results show that if the liquid resistance (a/b in Table 1) of the liquid inflow layer is the same, the electrodes can be brought closer to the ion-exchange membrane in Examples 1 to 3 than in the comparative example, and the cell resistivity can be lowered.

[Table 1]

| | Comparative Example 1 | Example 1 | Example 2 | Example 3 | Reference Example 1 |
|---|---|---|---|---|---|
| Number of electrode pieces | 1 | 2 | 3 | 6 | 3 |
| Width of electrode piece [mm] | 96 | 46 | 29.3 | 12.7 | 29.3 |
| a: width of liquid inflow layer (mm) | 99 | 49 | 32.3 | 15.7 | 32.3 |
| b: number of stacked sheets of CFP | 6 | 3 | 2 | 1 | 2 |
| a/b | 16.5 | 16.3 | 16.2 | 15.7 | 16.2 |
| Cell resistivity [$\Omega \cdot cm^2$] | 1.31 | 0.83 | 0.55 | 0.61 | 0.73 |
| Effective area ratio | 100% | 96% | 92% | 79% | 92% |

Reference Signs List

```
10:              ion-exchange membrane
20:              current collector plate
20a, 20b:        accommodation portion
21, 21A, 21B:    supply passage wall
22, 22A, 22B:    inner wall
23:              supply passage
30:              electrode
31:              electrode pieces
31A, 31B:        electrode pieces
32, 32A, 32B:    liquid inflow layer
33, 33A, 33B:    liquid outflow layer
100:             redox flow battery
A, B:            flow passage network (discharge passage)
```

**Claims**

1. A redox flow battery comprising:

   an ion-exchange membrane;
   a liquid inflow layer;
   an electrode; and
   a current collector plate, so as to be stacked in this order,
   wherein the electrode includes a plurality of electrode pieces which are disposed in parallel in a plane direction,
   a liquid supply passage for supplying an electrolytic solution to the liquid inflow layer is provided between the adjacent electrode pieces, and
   the electrolytic solution passes through the electrode from an ion-exchange membrane side surface of the electrode to a current collector plate side surface of the electrode.

2. The redox flow battery according to claim 1, further comprising:
   a liquid outflow layer provided between the electrode and the current collector plate.

3. The redox flow battery according to claim 1 or 2,
   wherein each of the plurality of electrode pieces has a rectangular shape, the liquid supply passage is provided along a long side of the electrode piece, and a length of a short side of the electrode piece is 5 to 70 mm.

4. The redox flow battery according to any one of claims 1 to 3,
wherein an effective area ratio of the electrode piece is 60% or greater,
where, the effective area ratio is (sum of areas of the plurality of electrode pieces)/{ (sum of the areas of the plurality of electrode pieces) + (sum of areas of portions between the plurality of electrode pieces)}.

5. The redox flow battery according to any one of claims 1 to 4,
wherein a thickness of the liquid inflow layer is 1/150 to 1/20 times the length of the short side of the electrode piece.

6. The redox flow battery according to any one of claims 1 to 5,
wherein the thickness of the liquid inflow layer is 0.1 to 0.9 mm.

7. A redox flow battery comprising: a structure of the redox flow battery according to any one of claims 1 to 6 on both a positive electrode side and a negative electrode side with respect to the ion-exchange membrane.

*FIG. 1*

*FIG. 2*

*FIG. 3*

(a)

(b)

## INTERNATIONAL SEARCH REPORT

International application No.

PCT/JP2017/035129

| A. CLASSIFICATION OF SUBJECT MATTER |
|---|
| *H01M8/18*(2006.01)i, *H01M8/02*(2016.01)i |

According to International Patent Classification (IPC) or to both national classification and IPC

| B. FIELDS SEARCHED |
|---|

Minimum documentation searched (classification system followed by classification symbols)
H01M8/18, H01M8/02

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2006-324116 A (Sumitomo Electric Industries, Ltd.), 30 November 2006 (30.11.2006), (Family: none) | 1-7 |
| A | JP 2015-138771 A (Sumitomo Electric Industries, Ltd.), 30 July 2015 (30.07.2015), & US 2017/0012299 A1 & EP 3098888 A1 & CA 2937798 A1 | 1-7 |
| A | JP 2012-523096 A (Commissariat a l'Energie Atomique et aux Energies Alternatives), 27 September 2012 (27.09.2012), & US 2011/0318617 A1 & FR 2944031 A1 & CN 102414887 A | 1-7 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 October 2017 (31.10.17) | 07 November 2017 (07.11.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/035129

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2006-40591 A　(The Kansai Electric Power Co., Inc.), 09 February 2006 (09.02.2006), (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016192698 A

- JP 2015530709 PCT